# EUROPEAN PATENT APPLICATION

(11) **EP 4 723 696 A1**
(43) Date of publication of application: **08.04.2026**
(21) Application number: 25206373.0
(22) Date of filing: 02.10.2025
(51) Int. Cl.: H04W 4/80, G01S 13/02, H04W 12/06, H04W 12/63

(54) **AUTHENTICATION OF MULTIPLE MOBILE DEVICES BY THE SAME TARGET DEVICE IN AN ULTRA-WIDEBAND SYSTEM**

(30) Priority: 04.10.2024 IN 202441075048
(71) Applicant: NXP B.V., 5656 AG Eindhoven (NL)
(72) Inventor: Parthasarathi, Srivathsa Masthi, 5656AG Eindhoven (NL); de Perthuis, Hugues Jean Marie, 5656AG Eindhoven (NL); Egger, Stefan, 5656AG Eindhoven (NL); Rocha Ferreira Lopes Tome, António Carlos, 5656AG Eindhoven (NL)
(74) Representative: Krott, Michel

(57) **Abstract**

An ultra-wide band (UWB) system, a target device and a method are disclosed. In an embodiment, the UWB system comprises a UWB transceiver configured to transmit and receive signals over a specific frequency range, and a UWB processor operably connected to the UWB to process the signals. The UWB processor being configured to broadcast parameters associated with a first authentication value, the parameters being sufficient to derive the first authentication value at a plurality of mobile devices, receive a plurality of second authentication values from the plurality of mobile devices, and receive a ranging data set for each valid second authentication value from a target secure element, the ranging data set being used to authenticate a mobile device associated with the valid second authentication value for secure communication via the UWB transceiver.

## Description

### FIELD AND BACKGROUND

The present disclosure relates to the authentication of multiple mobile devices by the same target device in an ultra-wideband system.

Currently, for contactless transit applications, two pass authentication is used. This enables mutual authentication and in most of the schemes, privacy protection as the user identification (ID) is not transmitted in plaintext.

For ultra-wideband (UWB) transit applications, the same requirements apply, but there are additional challenges. Although the range of UWB is in meters instead of centimeters and throughput is measured in mb/s instead of Kb/s, the channel is shared between multiple users and is dedicated to ranging and data transmission so latencies are much higher. The solution is then to start the initial phase of the transaction, i.e., the authentication phase, from a larger distance, but this means that every gate needs to authenticate with all devices in range. As many of these devices will not end up transacting with this gate, as the users will pass through other gates (or none), the overhead of the authentication becomes large.

### SUMMARY

An ultra-wide band (UWB) system, a target device and a method are disclosed. In an embodiment, the UWB system comprises a UWB transceiver configured to transmit and receive signals over a specific frequency range, and a UWB processor operably connected to the UWB to process the signals. The UWB processor being configured to broadcast parameters associated with a first authentication value, the parameters being sufficient to derive the first authentication value at a plurality of mobile devices, receive a plurality of second authentication values from the plurality of mobile devices, and receive a ranging data set for each valid second authentication value from a target secure element, the ranging data set being used to authenticate a mobile device associated with the valid second authentication value for secure communication via the UWB transceiver.

In an embodiment, the UWB processor is configured to broadcast the parameters associated with the first authentication value in a command message.

In an embodiment, the UWB processor is configured to broadcast the parameters associated with the first authentication value in a UWB scheduling control message.

In an embodiment, the UWB processor is configured to broadcast the parameters associated with the first authentication value out-of-band compared to the second authentication values from the plurality of mobile devices.

In an embodiment, the parameters associated with the first authentication value include at least two of a session identifier, a padding value and an epoch value.

In an embodiment, the ranging data set for each valid second authentication value includes at least a session identifier.

In an embodiment, the ranging data set for each valid second authentication value further includes a UWB ranging session key.

In an embodiment, each of the second authentication values is a value formed by concatenating at least some of the parameters associated with the first authentication value from the most significant bit (MSB) to the least significant bit (LSB).

In an embodiment, the UWB processor is further configured to receive a ranging data set from a particular mobile device from the plurality of mobile devices and compare the ranging data set from the particular mobile device with a corresponding ranging data set for the particular mobile device from the target secure element.

In an embodiment, a method comprises broadcasting parameters associated with a first authentication value from an ultra-wideband (UWB) system of a target device, the parameters being sufficient to derive the first authentication value at a plurality of mobile devices, receiving a plurality of second authentication values at the UWB system from the plurality of mobile devices, and receiving a ranging data set for each valid second authentication value from a target secure element at the UWB system, the ranging data set being used to authenticate a mobile device associated with the valid second authentication value for secure communication.

In an embodiment, broadcasting the parameters associated with the first authentication value includes broadcasting the parameters associated with the first authentication value from the ultra-wideband (UWB) system of the target device in a command message.

In an embodiment, broadcasting the parameters associated with the first authentication value includes broadcasting the parameters associated with the first authentication value from the ultra-wideband (UWB) system of the target device in a UWB scheduling control message.

In an embodiment, broadcasting the parameters associated with the first authentication value includes broadcasting the parameters associated with the first authentication value from the ultra-wideband (UWB) system of the target device out-of-band compared to the second authentication values from the plurality of mobile devices.

In an embodiment, the parameters associated with the first authentication value include at least two of a session identifier, a padding value and an epoch value.

In an embodiment, the ranging data set for each valid second authentication value includes at least a session identifier.

In an embodiment, the ranging data set for each valid second authentication value further includes a UWB ranging session key.

In an embodiment, each of the second authentication values is a value formed by concatenating at least some of the parameters associated with the first authentication value from the most significant bit (MSB) to the least significant bit (LSB).

In an embodiment, the method further comprises receiving a ranging data set from a particular mobile device from the plurality of mobile devices and comparing the ranging data set from the particular mobile device with a corresponding ranging data set for the particular mobile device from the target secure element.

In an embodiment, a target device comprises a secure element to run at least one application and store data, and an ultra-wideband (UWB) system operably coupled to the secure element. The UWB system is configured to transmit and receive signals over a specific frequency range, broadcast parameters associated with a first authentication value, the parameters being sufficient to derive the first authentication value at a plurality of mobile devices, receive a plurality of second authentication values from the plurality of mobile devices, and obtain a ranging data set for each valid second authentication value from the secure element, the ranging data set being used to authenticate a mobile device associated with the valid second authentication value for secure communication.

In an embodiment, the UWB system is configured to broadcast the parameters associated with the first authentication value in a UWB scheduling control message.

These and other aspects in accordance with embodiments will become apparent from the following detailed description, taken in conjunction with the accompanying drawings, illustrated by way of example of the principles of the embodiments.

### BRIEF DESCRIPTION OF THE DRAWINGS

Fig. 1 is a diagram of an ultra-wideband (UWB) communications system in accordance with an embodiment of the invention.
Fig. 2 is a flow diagram of a process of authenticating multiple mobile devices in the UWB communications system in accordance with an embodiment of the invention.
Fig. 3 shows a transmit system authentication sequence of the UWB communications system in accordance with an embodiment of the invention.
Fig. 4 is a flow diagram of a process of UWB link transporting challenge 1 and challenge 2 values in the UWB communications system in accordance with an embodiment of the invention.
Fig. 5 illustrates a frame format for a Ranging Response Message (RRM) frame in accordance with an embodiment of the invention.
Fig. 6 is a process flow diagram of a method in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

As used herein, the term "coupled" or "connected" includes directly coupled or directly connected so that one element is directly coupled or connected to another element, and indirectly coupled or indirectly connected so that one element is indirectly coupled or connected to another element, i.e., one or more elements may be present between the coupled or connected elements.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

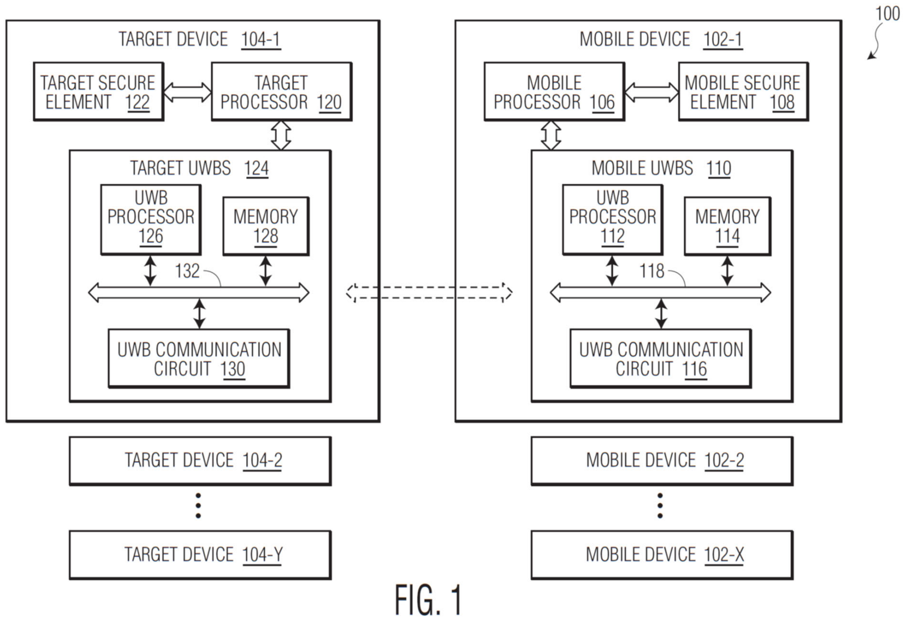

Turning now to Fig. 1, an ultra-wideband (UWB) communications system 100 in accordance with an embodiment of the invention is shown. The UWB communications system 100 may include one or more UWB-enabled mobile devices 102-1...102-X that can interact with one or more UWB-enabled target devices 104-1...104-Y using a secure ranging technique, which involves an authentication process. There can be any number of mobile devices and any number of target devices included in the UWB communications system, depending on the interactions between the devices.

The mobile devices 102-1...102-X and the target device 104-1...104-Y of the UWB communications system 100 may be designed or programmed to execute various transactions or operations between the devices. As an example, each of the target devices 104-1...104-Y may be a gate of a transit system and the mobile devices 102-1...102-X may be user devices that are used to execute fare transactions to gain entry to the transit system. In this example, each of the target device 104-1...104-Y, as a gate of the transit system, initiates an access control operation to provide access to the users of the mobile devices 102-1...102-X when the distance of a particular mobile device from that target device is detected to be within a predefined range.

Each of the mobile devices 102-1...102-X (generally referenced as "102") includes a mobile processor 106, a mobile secure element 108 and a mobile ultra-wideband system (UWBS) 110. The mobile processor 106 of the mobile device 102 can be any type of a processing device, such as a processor commonly found on a smartphone. Thus, the mobile processor 106 can run various applications, such as a transit application for mobile devices, which can be used to pay for transit system fares.

The mobile secure element 108 of the mobile device 102 includes circuitry to execute operations related to secure ranging. In an embodiment, the mobile secure element 108 may include hardware and/or software necessary to run small applications, such as a service provider applet (SPA), an UWB authentication applet and Secure UWB Service (SUS). The mobile secure element 108 may also include memory to store data needed for secure ranging. As an example, the mobile secure element 108 may be a single-die secured Near Field Communication (NFC) controller, such as an SN220 chip, which is available from NXP Inc.

The mobile UWBS 110 of the mobile device 102 is configured to enable UWB communications with other UWB-enabled devices, such as the target devices 104-1...104-Y. The mobile UWB system 110 may include various components to execute UWB-related operations, such as a UWB processor 112, memory 114 and a UWB communication circuit 116, which are connected to a bus 118. The UWB communication circuit 116 is configured to transmit and receive data signals using UWB. The UWB processor 112 executes operations for transmitting and receiving the data signals from the UWB communication circuit 116, as well as other operations, using data stored in the memory 114. The operations executed by the UWB processor 112, the memory 114 and the UWB communication circuit 116 will be described in more detail below.

Each of the target device 104-1...104-Y (generally referenced as "104") includes a target processor 120, a target secure element 122 and a target UWBS 124. The target processor 120 of the target device 104 can be any type of a processing device, such as a processor commonly found on a computer system or a mobile device. Thus, the target processor 120 can run various applications, such as an authentication and transit application for a gate of a transit system, which can be used to authorize entrance for users of UWB-enabled mobile devices, such as the mobile devices 102 upon authentication and payment of transit fare.

The target secure element 122 of the target device 104 includes circuitry to execute operations related to secure ranging. In an embodiment, the target secure element 122 may include hardware and/or software necessary to run small applications, such as a FiRa applet. The target secure element 122 may also include memory to store data, such as UWB authentication keys and transit keys needed for secure ranging. As an example, the target secure element 122 may be a secure element for secure UWB ranging in Internet-of-Things (IOT), such as an SE051 device, which is available from NXP Inc.

Similar to the mobile UWBS 110, the target UWBS 124 of the target device 104 is configured to enable UWB communications with other UWB-enabled devices, such as the mobile devices 102-1...102-X. The target UWB system 124 may include various components to execute UWB-related operations, such as a UWB processor 126, memory 128 and a UWB communication circuit 130, which are connected to a bus 132. The UWB communication circuit 130 is configured to transmit and receive data signals using UWB. The UWB processor 126 executes operations for transmitting and receiving the data signals from the UWB communication circuit 130, as well as other operations, using data stored in the memory 128. The operations executed by the UWB processor 126, the memory 128 and the UWB communication circuit 130 will be described in more detail below.

In a conventional secure ranging process of interest between a target device and a mobile device, the target device requests a controllee FiRa applet at the target device to initiate a transaction. This is done by selecting the controllee FiRa applet, selecting an application dedication file (ADF) and sending an INITIATE TRANSACTION command. In response to the INITIATE TRANSACTION command, the controlee FiRa applet sends a SELECT command, which is transmitted over out-of-band (OOB) to the mobile device and forwarded to a controller FiRa applet at the mobile device. A response to the SELECT command is returned to the target device over OOB and dispatched to the controllee FiRa applet using a DISPATCH command. As a response, the controllee FiRa^{®} applet returns the next application protocol data unit (APDU) to be sent over OOB using a SELECT ADF command, which is sent over OOB and dispatched to the controller FiRa applet. The response to the SELECT ADF command is returned over OOB and dispatched to the controllee FiRa applet, again using the DISPATCH command.

This back and forth continues until a secure channel is established, i.e., until a response to a GENERAL AUTHENTICATE 2 command is processed in the controllee FiRa applet, which is done after processing a response to a GENERAL AUTHENTICATE 1 command. This sequence is executed sequentially for authentication between any two devices.

As described below, the UWB communications system 100 is configured to overcome the tight sequencing of the INITIATE TRANSACTION command and the GENERAL AUTHENTICATE 2 command by having one INITIATE TRANSACTION command followed by series of GENERAL AUTHENTICATE 2 commands for multiple devices. In particular, the UWB communications system 100 allows responses to an INTERNAL AUTHENTICATE (IA) command from multiple mobile devices to be received by a target device, e.g., a gate of a transit system, over UWB and dispatched to the FiRa applet of the gate. This results in authentication of multiple mobile devices. The result of this authentication process is the generation of a Ranging Data Set (RDS) for each of the mobile devices, which is used for secure communications between the authenticated mobile device and the target device.

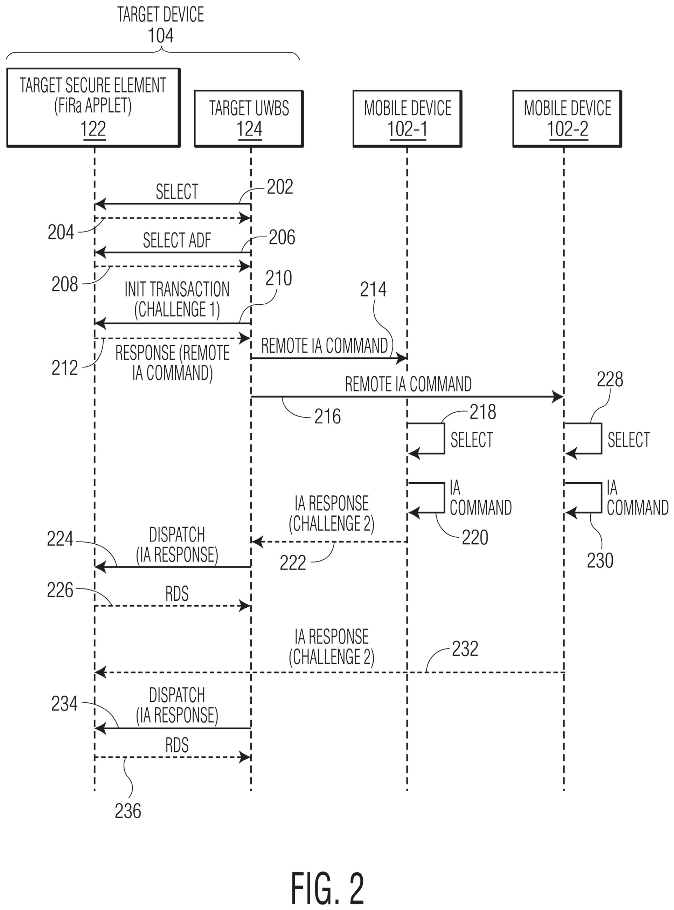

Turning now to Fig. 2, a flow diagram of a process of authenticating multiple mobile devices in the UWB communications system 100 in accordance with an embodiment of the invention is shown. Referring simultaneously to Fig. 2 and Fig. 1, the process described in Fig. 2 allows multiple mobile devices to be processed a single target device in the UWB communications system 100 to more efficiently authenticate the mobile devices, i.e., authenticating multiple mobile devices in parallel. In addition, the resulting RDSs for the mobile devices are shared by the target devices in the UWB communications system 100 so that reauthentication of a mobile device by another target device is not necessary once that mobile device is authenticated by any of the target devices. Thus, in a transit fare application, a user with a mobile device can be authenticated by one of the gates of the transit system, but can use any of the other gates to pay the transit fare, i.e., can go through any of the gates rather than the gate that authenticated the mobile device.

The process begins with a FiRa applet running in the target secure element 122 of a target device 104 being selected by the target UWBS 124 of the target device 104 to initiate the authentication process of multiple mobile devices, e.g., the mobile devices 104-1 and 104-2, as indicated by the arrow 202. In response to the selection, an acknowledgement message is transmitted from the FiRa applet to the target UWBS 124, as indicated by the arrow 204.

Next, an ADF of the FiRa applet is selected by the target UWBS 124, as indicated by the arrow 206. The ADF corresponds to data structure within the application data structure that hosts, for example, applications and application specific data. In response to the ADF selection, an acknowledgement message is transmitted from the FiRa applet to the target UWBS, as indicated by the arrow 208.

Next, an initiate transaction command is transmitted to the FiRa applet from t the target UWBS 124, as indicated by the arrow 210. In response to the initiate transaction command, a remote internal authenticate (IA) command is transmitted from the FiRa applet to the mobile devices, e.g., the mobile devices 102-1 and 102-2, via the target UWBS, as indicated by the arrows 212, 214 and 216. The IA command includes a Challenge 1 value, which is a first authentication value transmitted from the target device 104 to mobile devices.

In response to the remote IA command to the mobile device 102-1, a FiRa mobile applet of the mobile device 102-1 is selected, as indicated by the arrow 218. The remote IA command is then processed by the FiRa mobile applet of the mobile device 102-1, as indicated by the arrow 220. After processing the command, an IA response is transmitted from the mobile device 102-1 to the target UWBS 124, as indicated by the arrow 222. The IA response includes a Challenge 2 value, which is a second authentication value that is transmitted from a mobile device to the target device 104.

Next, the IA response from the mobile device 102-1 is dispatched to the FiRa applet of the target device 104 from the UWBS 124 of the target device 104, as indicated by the arrow 224. Using the IA response, an RDS (which may include a UWB session identifier (ID) and a UWB Ranging session key (URSK)) for the mobile device 102-1 is generated and transmitted from the FiRa applet of the target device 104 to the target UWBS 124, as indicated by the arrow 226. The RDS can then be used for secure communication and/or transaction with the mobile device 102-1.

Similarly, in response to the remote IA command to the mobile device 102-2, the FiRa mobile applet of the mobile device 102-2 is selected, as indicated by the arrow 228. The remote IA command is then processed by the FiRa mobile applet of the mobile device 102-2, as indicated by the arrow 230. After processing the command, an IA response is transmitted from the mobile device 102-2 to the target UWBS 124 of the target device 104, as indicated by the arrow 232.

Next, the IA response from the mobile device 102-2 is dispatched to the FiRa applet of the target device 104 from the UWBS 124 of the target device 104, as indicated by the arrow 234. Using the IA response, an RDS (which may include a UWB session ID and a URSK) for the mobile device 102-2 is generated and transmitted from the FiRa applet of the target device 104 to the UWBS 124, as indicated by the arrow 236. The RDS can then be used for secure communication and/or transaction with the mobile device 102-2. In a similar manner, other mobile devices that send IA responses may also be authenticated by the same target device.

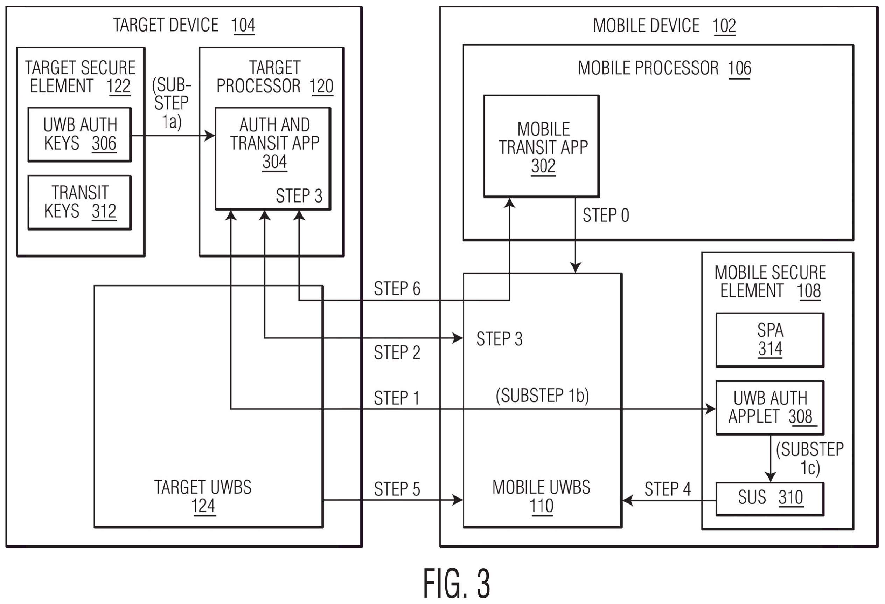

A transmit system authentication sequence of the UWB communications system 100 in accordance with an embodiment of the invention is described with reference to Fig. 3, which shows a single target device 104 (gate) and only one of the mobile devices 102. The transmit system authentication sequence begins with step 0, when a static session setup is executed by a mobile transit application 302 running on the mobile processor 106 of the mobile device 102.

Next, at step 1, an authentication application protocol data unit (APDU) exchange is executed. This step involves several substeps. On the gate side, at substep 1a, UWB authentication is initiated by an authentication and transit application 304 running on the target processor 120, relying on UWB authentication keys 306 stored in a secure access module of the target secure element 122 for cryptographic operations, such as an NXP MIFARE Secure Access Module. On the mobile device side, at substep 1b, an APDU is received by a UWB authentication applet 308 running in the mobile secure element 108 and a response required for authentication is executed, which may include selecting an ADF and responding to General Authenticate 1 and 2 commands. In addition, at substep 1c, an RDS is generated by the UWB authentication applet 308 on both sides from the cryptographic materials exchanged. In the mobile device, the RDS is transferred to an SUS 310 running in the mobile secure element 108 as soon as the authentication is completed.

Next, at step 2, a UWB session ID is sent to the mobile device 102 by the target device 104 over Data Message Payload Information Element (IE) as application data. In particular, the UWB session ID is sent to the mobile UWBS 110 of the mobile device 102 from the authentication and transit application 304 via the target UWBS 124.

Next, at step 3, the proprietary message in the Data Message Payload IE is decoded and the UWB session ID is retrieved by the mobile UWBS 110.

Next, at step 4, the RDS is fetched from the SUS 310 by the mobile UWBS 110 using Get_RDS(Session ID) APDU. In an embodiment, a secure channel between the mobile UWBS 110 and the SUS 310 may have been opened earlier, which may be used to fetch the RDS from the SUS by the mobile UWBS. In the target device 104, the RDS is transmitted to the target UWBS by the UWB authentication applet 308.

Next, at steps 5 and 6, the session key obtained from the RDS is used for secure ranging and for fare transaction. Specifically, at step 5, the session key is used for secure ranging between the target UWBS 124 and the mobile UWBS 110. The session key is also used for fare transaction from the authentication and transit application 304 (relying on transit keys 312 stored in the target secure element 122) toward the mobile transit application 302, which may rely on a service provider applet (SPA) 314 running in the mobile secure element 108. This should happen only once distance measured in secure ranging is within a certain threshold (e.g., a fare transaction area of 1 meter by 1.5 meter about the target device 104).

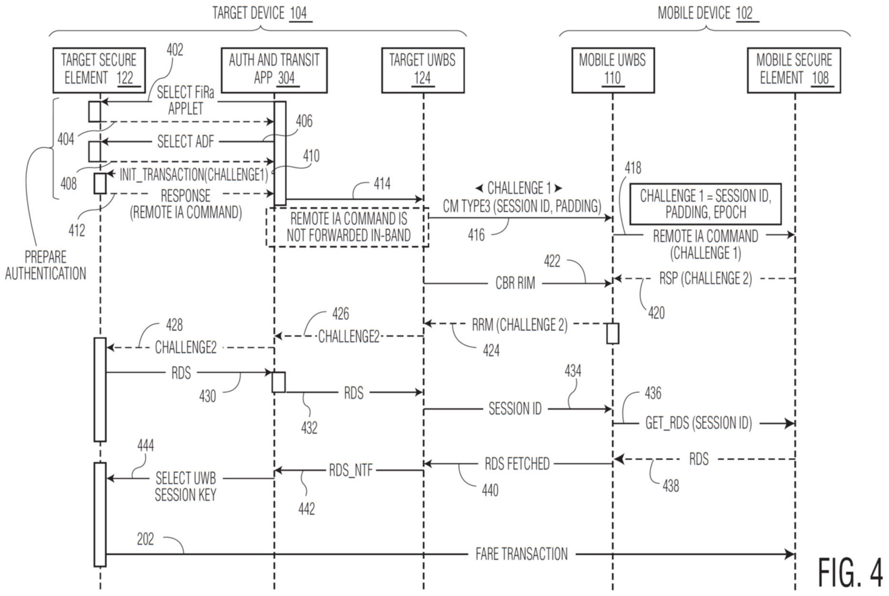

Turning now to Fig. 4, a flow diagram of a process of UWB link transporting the Challenge 1 and Challenge 2 values in the UWB communications system 100 in accordance with an embodiment of the invention. The process begins with operations for authentication preparation. First, a FiRa applet is selected by the authentication and transit application 304 of the target device 104 to initiate the authentication process, as indicated by the arrow 402. In response to the selection, an acknowledgement message is transmitted from the target secure element 122 to the authentication and transit application 304, as indicated by the arrow 404.

Next, an application dedication file (ADF) of the FiRa applet is selected by the target UWBS 124, as indicated by the arrow 406. The ADF corresponds to data structure within the application data structure that target device, for example, applications and application specific data. In response to the ADF selection, an acknowledgement message is transmitted from the FiRa applet to the target UWBS 124, as indicated by the arrow 408.

Next, an initiate transaction command is transmitted to the target secure element 122 from the authentication and transit application 304, as indicated by the arrow 410. In response to the initiate transaction command, a remote internal authenticate (IA) command with some of the parameters needed to derive the Challenge 1 values is generated by the target secure element 122 and transmitted to UWB-enabled mobile devices 102, such as the mobile device illustrated in Fig. 4. However, the remote IA command with the Challenge 1 parameters is not transmitted in-band from the target device 104 to the mobile devices. Rather, the remote IA command is transmitted out-of-band to the mobile devices from the target device. In an embodiment, the IA command is transmitted in a FiRa-based Hybrid UWB Scheduling (HUS) Control Message (CM Type 3). Thus, the Challenge 1 parameters are transmitted to the mobile devices as contents in the HUS Control Message, which can significantly improve the link-budget. Once the HUS controlee (i.e., one of the mobile devices) receives the message, the HUS controlee derives the Challenge 1 value with the following parameters:
a. Session ID - This is a 4 bytes field of the HUS primary session running on the gate.
b. Padding - This is an 8 bytes field of a known value, which is programmed over the FiRa^{®} UWB Command Interface (UCI). The padding field is constructed with 4 bytes of Session ID and 4 bytes ASCII value of the station name. As an example, Session ID can be 0x00010002 and ACII can be 0x535A544E.
c. Epoch time - This is a 4 bytes field consisting of time of the day in the format YYYY/MM/DD/Hr, which is converted to thirty-two (32) bit Epoch time. The Epoch time is shared over Bluetooth Low Energy (BLE) and upon receiving the Epoch time by the mobile device, a device application, e.g., the mobile transit application 302, can configure the device UWBS 110 over UCI.

Once the remote IA response is generated by the FiRa applet running on the target secure element 122 and forwarded to the authentication and transit application 304, as indicated by the arrow 412, the authentication and transit application 304 of the target device 104 configures the HUS primary session and transmits the remote IA command to the target UWBS 124, as indicated by the arrow 414. After the HUS primary session has been configured, a HUS CM Type 3 message with the header IE containing the session ID and the padding configured over the UCI is transmitted from the mobile UWBS 110 from the target UWBS 124, as indicated by the arrow 416.

The HUS CM Type 3 message is received and a Challenge 1 value of the remote IA command, which may be a 128-bit value for example, is formed by the mobile UWBS 110 by concatenating the Session ID, the Padding value and the Epoch value from the most significant bit (MSB) to the least significant bit (LSB). The remote IA command with the Challenge 1 value is then issued by the mobile UWBS 110, as indicated by the arrow 418. In response to the remote IA command with the Challenge 1 value, a Challenge 2 value, which may be a 128-bit value for example, is generated and returned to the mobile UWBS 110 by the mobile secure element 108, as indicated by the arrow 420. The Challenge 2 value, which is the response to the remote IA command, is stored at the mobile device 102.

Meanwhile, the mobile device proximity is tracked by the target device 104 using contention-based ranging, as indicated by the arrow 422. When the mobile device 102 is at a configured or predefined proximity, the device address of the mobile device is added to the Ranging Management List (RML) by the target device 104. Concurrently, a Ranging Response Message (RRM) with the Challenge 2 value is sent from the mobile device 102, until the device address is present in the RML as an RML entry. Thus, the RRM with the Challenge 2 value is eventually transmitted from the mobile UWBS 110, which generates the RRM, to the target UWBS 124, as indicated by the arrow 424, and the Challenge 2 value is transmitted from the target UWBS 124 to the target secure element 122, as indicated by the arrows 426 and 428.

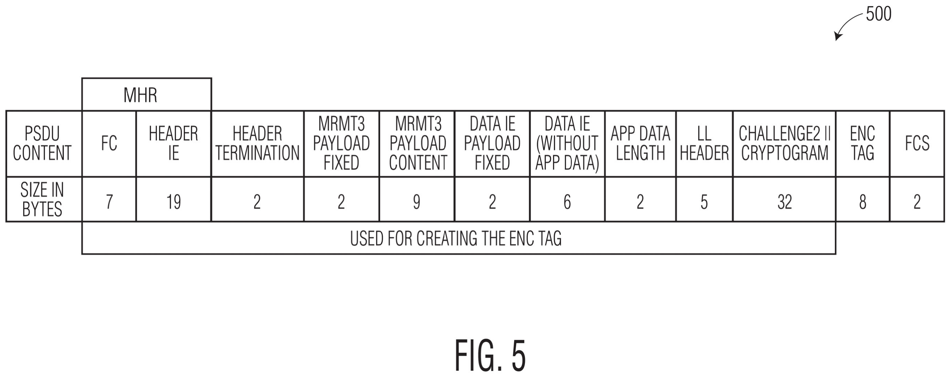

In an embodiment, the RRM is sent as an RRM frame 500 with the Challenge 2 value in a frame format shown in Fig. 5. As illustrated in Fig. 5, the RRM frame 500 includes various physical service data unit contents. The RRM frame 500 includes Frame Control (FC) and header IE, which are parts of a Media Access Control (MAC) Header (MHR). The RRM frame 500 further includes header termination, Measurement Report Message Type 3 (MRMT3) payload fixed, MRMT3 payload content, data IE payload fixed, data IE (without application data), application data length, Link Layer (LL) header, Challenge 2 and cryptogram, enc tag and a frame check sequence (FCS).

In an embodiment, for transmission of the RRM frame 500 with the Challenge 2 value, a link is created between the mobile secure element 108 and the target secure element 122. In addition, the Challenge 2 value is encoded with a proprietary heading value, and stored by the mobile device 102 until the mobile device switches to secure ranging and fare transaction after receiving the Session ID for the same in-band.

After the Challenge 2 value has been received by the target secure element 122, the RDS is transmitted from the target secure element 122 to the target UWBS 124, as indicated by the arrows 430 and 432. A session ID is then transmitted from the target UWBS 124 to the mobile UWBS 110, as indicated by the arrow 434. The RDS is then retrieved from the mobile secure element 108 by the mobile UWBS 110, for example, using a GET command with the session ID, as indicated by the arrows 436 and 438. The RDS fetched from the mobile secure element 108 is sent to the target UWBS 124 from the mobile UWBS 110, as indicated by the arrow 440. Upon verification of the fetched RDS from the RDS generated by the target secure element (i.e., whether the two RDSs are a match by comparing the two RDSs), an RDS_NTF message is transmitted to the authentication and transit application 304 from the target UWBS 124, as indicated by the arrow 442.

In response, an appropriate UWB Session key is selected from the target secure element 122 by the authentication and transit application 304, as indicated by the arrow 444. Relying on the selected MOT key, a fare transaction is executed between the target secure element 122 and the mobile secure element 108 using the applets running on the secure elements.

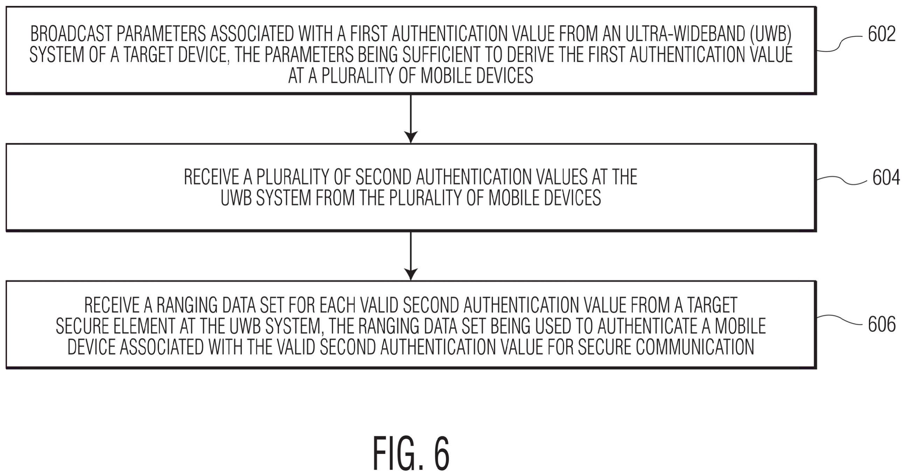

A method in accordance with an embodiment of the invention is described with reference to a process flow diagram of Fig. 6. At block 602, parameters associated with a first authentication value are broadcasted from an ultra-wideband (UWB) system of a target device, the parameters being sufficient to derive the first authentication value at a plurality of mobile devices. At block 604, a plurality of second authentication values is received at the UWB system from the plurality of mobile devices. At block 606, a ranging data set for each valid second authentication value from a target secure element is received at the UWB system, the ranging data set being used to authenticate a mobile device associated with the valid second authentication value for secure communication.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It can also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments of the invention may be implemented entirely in hardware or in an implementation containing both hardware and software elements. In embodiments that use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. An ultra-wideband (UWB) system (124) comprising:
a UWB communication circuit (130) configured to transmit and receive signals over a specific frequency range; and
a UWB processor (126) operably connected to the UWB communication circuit (130) to process the signals, the UWB processor configured to:
broadcast parameters associated with a first authentication value, the parameters being sufficient to derive the first authentication value at a plurality of mobile devices;
receive a plurality of second authentication values from the plurality of mobile devices; and
receive a ranging data set for each valid second authentication value from a target secure element (122), the ranging data set being used to authenticate a mobile device (102) associated with the valid second authentication value for secure communication via the UWB communication circuit (130).

2. The UWB system according to claim 1, wherein the UWB processor (126) is configured to broadcast the parameters associated with the first authentication value in a command message.

3. The UWB system of any of claims 1-2, wherein the UWB processor (126) is configured to broadcast the parameters associated with the first authentication value in a UWB scheduling control message.

4. The UWB system according to any of claims 1-3, wherein the UWB processor (126) is configured to broadcast the parameters associated with the first authentication value out-of-band compared to the second authentication values from the plurality of mobile devices.

5. The UWB system according to any of claims 1-4, wherein the parameters associated with the first authentication value include at least two of a session identifier, a padding value and an epoch value.

6. The UWB system according to any of claims 1-5, wherein the ranging data set for each valid second authentication value includes at least a session identifier.

7. The UWB system according to claim 6, wherein the ranging data set for each valid second authentication value further includes a UWB ranging session key.

8. The UWB system according to any of claims 1-7, wherein each of the second authentication values is a value formed by concatenating at least some of the parameters associated with the first authentication value from a most significant bit (MSB) to a least significant bit (LSB).

9. The UWB system according to any of claims 1-8, wherein the UWB processor (126) is further configured to receive a ranging data set from a particular mobile device (102) from the plurality of mobile devices and compare the ranging data set from the particular mobile device with a corresponding ranging data set for the particular mobile device from the target secure element (122).

10. A method comprising:
broadcasting parameters associated with a first authentication value from an ultra-wideband (UWB) system (124) of a target device (104), the parameters being sufficient to derive the first authentication value at a plurality of mobile devices (102);
receiving a plurality of second authentication values at the UWB system from the plurality of mobile devices; and
receiving a ranging data set for each valid second authentication value from a target secure element (122) at the UWB system (124), the ranging data set being used to authenticate a mobile device (102) associated with the valid second authentication value for secure communication.

11. The method according to claim 10, wherein broadcasting the parameters associated with the first authentication value includes broadcasting the parameters associated with the first authentication value from the UWB system (124) of the target device (104) in a command message.

12. The method according to any of claims 10-11, wherein broadcasting the parameters associated with the first authentication value includes broadcasting the parameters associated with the first authentication value from the UWB system (124) of the target device (104) in a UWB scheduling control message.

13. The method according to any of claims 10-12, wherein broadcasting the parameters associated with the first authentication value includes broadcasting the parameters associated with the first authentication value from the UWB system (124) of the target device (104) out-of-band compared to the second authentication values from the plurality of mobile devices (102).

14. The method according to any of claims 10-13, wherein the parameters associated with the first authentication value include at least two of a session identifier, a padding value and an epoch value.

15. The method according to any of claims 10-14, wherein:
the ranging data set for each valid second authentication value includes:
a session identifier; and
a UWB ranging session key; and
each of the second authentication values is a value formed by concatenating at least some of the parameters associated with the first authentication value from a most significant bit (MSB) to a least significant bit (LSB).
